# EUROPEAN PATENT APPLICATION

(11) **EP 4 567 063 A1**
(43) Date of publication of application: **11.06.2025**
(21) Application number: 23307144.8
(22) Date of filing: 06.12.2023
(51) Int. Cl.: C08L 13/00, C08L 15/00, C09J 147/00

(54) **SULFUR-CURABLE COMPOSITION**

(71) Applicant: Bostik SA, 92800 Puteaux (FR)
(72) Inventor: BATCHELOR, Daniel, STAFFORD (GB); THOMAS, Matthew, STAFFORD (GB); SCHUCK, Bernhard, GROSSOSTHEIM (DE)
(74) Representative: Arkema Patent

(57) **Abstract**

The invention relates to a sulfur-curable composition comprising:
- an anhydride and/or acid modified rubber,
- an aromatic rubber,
- a non-anhydride/acid modified rubber copolymer, and
- a sulfur-based crosslinking agent.

Furthermore, the invention relates to a method for bonding substrates comprising the steps of:
- coating, on at least one surface of the substrates, of the sulfur-curable composition according to the invention, then
- contacting the substrates.

The invention also relates to an article comprising the sulfur-curable composition according to the invention, said composition bonding at least two substrates of said article.

Finally, the invention relates to the use of the sulfur-curable composition according to the invention as an adhesive, in particular a crash-resistant adhesive.

## Description

### TECHNICAL FIELD

The present invention relates to a sulfur-curable composition and its use, a method for bonding substrates and an article.

### TECHNICAL BACKGROUND

Structural adhesives are widely used in the automotive sector, in particular to reduce the number of welds which results in a reduction of assembly costs.

In the event of a collision, crash-resistant adhesives are specified to provide the mechanical performance required when bonding certain parts of a vehicle. These adhesives must have a high impact strength, including at low temperatures (e.g. down to -35°C) for automobiles used in cold climates.

Current adhesives solutions in the marketplace for crash-resistant applications are not based on rubber technology. These solutions can contain compounds that are generally considered harmful. An example of this would be bisphenol A, in epoxy based adhesives.

Therefore, there is a need for a less-hazardous crash-resistant adhesive.

The present invention is directed to the provision of a sulfur-curable rubber-based composition to provide an alternative solution for crash resistant applications.

Sulfur-curable rubber-based compositions do not comprise epoxy compounds. However, they usually have the major drawback that they become brittle at low temperatures; thus, they are not suitable to be used as crash-resistant adhesives.

Consequently, the present invention aims at providing a sulfur-curable rubber-based composition having an improved impact resistance over a wide range of temperatures, in particular at 23°C and/or lower temperatures such as -35°C.

Furthermore, the present invention aims at providing a sulfur-curable rubber-based composition having good lap shear properties.

It has now been found that these aims can be achieved by the sulfur-curable composition described below.

### SUMMARY OF THE INVENTION

The invention relates to a sulfur-curable composition comprising:
- an anhydride and/or acid modified rubber,
- an aromatic rubber,
- a non-anhydride/acid modified rubber copolymer, and
- a sulfur-based crosslinking agent.

Furthermore, the invention relates to a method for bonding substrates comprising the steps of:
- coating, on at least one surface of the substrates, of the sulfur-curable composition according to the invention, then
- contacting the substrates.

The invention also relates to an article comprising the sulfur-curable composition according to the invention, said composition bonding at least two substrates of said article.

Finally, the invention relates to the use of the sulfur-curable composition according to the invention as an adhesive, in particular a crash-resistant adhesive.

The present invention makes it possible to address the needs mentioned above. In particular, the sulfur-curable composition according to the invention surprisingly has an improved impact resistance over a wide range of temperatures, especially at 23°C and/or lower temperatures (such as -35°C) while maintaining a good lap shear strength.

### DESCRIPTION OF THE INVENTION

### Sulfur-curable composition

By "sulfur-curable composition", it is intended a composition capable of being cured by sulfur, leading to a cured composition comprising a network of crosslinked compounds via sulfur bridges, the sulfur bridges being one or more sulfur atoms.

### Anhydride and/or acid modified rubber

By "anhydride and/or acid modified rubber", it is intended a rubber comprising non-aromatic carbon-carbon double bonds and at least one carboxylic anhydride group (-C(O)-O-C(O)-) and/or carboxylic acid group (-COOH), preferably at least one carboxylic anhydride group.

Preferably, the anhydride and/or acid modified rubber does not comprise any aromatic ring.

Advantageously, the anhydride and/or acid modified rubber is an anhydride and/or acid modified rubber comprising non-aromatic carbon-carbon double bonds selected from anhydride and/or acid modified polyisoprene, anhydride and/or acid modified polybutadiene, anhydride and/or acid modified polypentadiene, anhydride and/or acid modified butadiene isoprene copolymer, anhydride and/or acid modified isobutene isoprene copolymer, anhydride and/or acid modified polychloroprene, anhydride and/or acid modified nitrile butadiene copolymer, and mixtures thereof, preferably from anhydride and/or acid modified polyisoprene, anhydride and/or acid modified polybutadiene, and mixtures thereof, more preferably is anhydride and/or acid modified polybutadiene, in particular anhydride modified polybutadiene. Said anhydride and/or acid modified rubber may be partially hydrogenated, but is preferably non-hydrogenated.

Advantageously, the anhydride and/or acid modified rubber is a rubber comprising non-aromatic carbon-carbon double bonds modified with at least one anhydride compound comprising at least one non-aromatic carbon-carbon double bond and at least one carboxylic anhydride group, preferably a cyclic anhydride compound (i.e. having an anhydride group engaged in a ring), and/or modified with at least one acid compound comprising at least one non-aromatic carbon-carbon double bond and at least one carboxylic acid group.

Said anhydride compound may be selected from maleic anhydride, dimethylmaleic anhydride, itaconic anhydride, tetrahydrophthalic anhydride, citraconic anhydride, and mixtures thereof, preferably from maleic anhydride, dimethylmaleic anhydride, citraconic anhydride, and mixtures thereof, in particular maleic anhydride.

Said acid compound may be selected from maleic acid, dimethylmaleic acid, fumaric acid, itaconic acid, tetrahydrophthalic acid, citraconic acid, acrylic acid, methacrylic acid, crotonic acid, isocrotonic acid, tiglic acid, 3-butenoic acid, (2-, 3- or 4-)pentenoic acid, (2-, 3-, 4- or 5-)hexenoic acid, cinnamic acid, sorbic acid, monoester derivatives thereof, and mixtures thereof, preferably from maleic acid, dimethylmaleic acid, fumaric acid, itaconic acid, tetrahydrophthalic acid, citraconic acid, monoester derivatives thereof, and mixtures thereof, more preferably from maleic acid, monoester derivatives of maleic acid, and mixtures thereof. Preferably, the at least one acid compound is a monoester derivative.

The anhydride and/or acid modified rubber may be obtained by grafting the at least one anhydride and/or acid compound onto the rubber main chain or by copolymerizing the at least one anhydride and/or acid compound with the monomers used for obtaining the rubber (e.g. butadiene monomers when the rubber is polybutadiene), preferably by grafting.

According to a preferred embodiment, the anhydride and/or acid modified rubber is:
- polyisoprene and/or polybutadiene, preferably polybutadiene, modified with
- at least one anhydride compound selected from maleic anhydride, dimethylmaleic anhydride, itaconic anhydride, tetrahydrophthalic anhydride, citraconic anhydride, and mixtures thereof, preferably from maleic anhydride, dimethylmaleic anhydride, citraconic anhydride, and mixtures thereof, in particular maleic anhydride.

The acid number of the anhydride and/or acid modified rubber may be comprised between 40 and 160 mg KOH per gram of said rubber, preferably between 50 and 130 mg KOH/g, more preferably between 60 and 100 mg KOH/g. The acid number can be measured according to ISO 2114.

In the context of the invention, the ranges of values are understood to be inclusive. For example, the range "between 0% and 25%" includes, in particular, the values 0% and 25%.

By "about X", it is intended more or less 10% the value of X.

Unless otherwise stated, standards mentioned throughout the present application are those in effect on the date the application is filed.

The number average molecular weight of the anhydride and/or acid modified rubber may vary between 1000 g/mol and 50000 g/mol, preferably between 1500 g/mol and 20000 g/mol, for example between 2000 g/mol and 5000 g/mol.

Throughout the present text, the number average molecular weight can be measured by size exclusion chromatography (or SEC), which is also denoted by the term "gel permeation chromatography" (or GPC), preferably with a polystyrene calibration.

Advantageously, the anhydride and/or acid modified rubber is liquid at 23°C and at atmospheric pressure (e.g. 101325 Pa).

The anhydride and/or acid modified rubber may have a glass transition temperature of less than -50°C. The glass transition temperature can be measured according to ISO 11 357-1.

The anhydride and/or acid modified rubber may have a viscosity at 20°C of less than 300000 mPa.s, preferably less than 100000 mPa.s, more preferably less than 25000 g/mol. It may be measured according to ISO 3219.

The anhydride and/or acid modified rubber content may be comprised between 1 % and 40 % by weight with respect to the total weight of the sulfur-curable composition, preferably between 5 % and 30 % by weight, more preferably between 8 % and 20 % by weight.

### Aromatic rubber

By "aromatic rubber", it is intended a rubber comprising non-aromatic carbon-carbon double bonds (i.e. not part of an aromatic ring) and at least one aromatic ring.

Advantageously, the aromatic rubber is an aromatic rubber comprising non-aromatic carbon-carbon double bonds selected from aromatic polyisoprene, aromatic polybutadiene, aromatic polypentadiene, aromatic butadiene isoprene copolymer, aromatic isobutene isoprene copolymer, aromatic polychloroprene, aromatic nitrile butadiene copolymer, and mixtures thereof, preferably from aromatic polyisoprene, aromatic polybutadiene, and mixtures thereof, more preferably is aromatic polybutadiene. Said aromatic rubber may be partially hydrogenated, but is preferably non-hydrogenated.

Advantageously, the aromatic rubber is a rubber comprising non-aromatic carbon-carbon double bonds modified with at least one aromatic compound comprising at least one non-aromatic carbon-carbon double bond and only one aromatic ring, for example selected from styrene, 2-methylstyrene, 3-methylstyrene, 4-methylstyrene, α-methylstyrene, and mixtures thereof, preferably from styrene, α-methylstyrene, and mixtures thereof, in particular styrene.

The aromatic rubber may be obtained by grafting the at least one aromatic compound onto the rubber main chain or by copolymerizing the at least one aromatic compound with the monomers used for obtaining the rubber (e.g. butadiene monomers when the rubber is polybutadiene), preferably by copolymerizing.

According to an embodiment, the aromatic rubber is:
- polyisoprene and/or polybutadiene, preferably polybutadiene, grafted with
- styrene and/or α-methylstyrene, preferably styrene.

According to a preferred embodiment, the aromatic rubber is:
- isoprene and/or butadiene, preferably butadiene, copolymerized with
- styrene and/or α-methylstyrene, preferably styrene.

In particular, the aromatic rubber is styrene butadiene random copolymer.

The number average molecular weight of the aromatic rubber may vary between 3000 g/mol and 50000 g/mol, preferably between 5000 g/mol and 20000 g/mol.

Advantageously, the aromatic rubber is liquid at 23°C and at atmospheric pressure (e.g. 101325 Pa).

The aromatic rubber may have a glass transition temperature of less than 0°C. The glass transition temperature can be measured using differential scanning calorimetry (DSC), for example according to standard ASTM D 3418-82.

The aromatic rubber content may be comprised between 1 % and 20 % by weight with respect to the total weight of the sulfur-curable composition, preferably between 2 % and 15 % by weight, more preferably between 3 % and 10 % by weight.

### Non-anhydride/acid modified rubber copolymer

By "non-anhydride/acid modified rubber copolymer", it is intended a rubber comprising non-aromatic carbon-carbon double bonds, but no carboxylic anhydride group (-C(O)-O-C(O)-) and no carboxylic acid group (-COOH). It is a copolymer because it comprises two or more different repeating units (i.e. obtained from two or more different monomers).

The non-anhydride/acid modified rubber copolymer may be a block copolymer or a random copolymer, preferably a block copolymer.

Advantageously, the non-anhydride/acid modified rubber copolymer is a rubber comprising non-aromatic carbon-carbon double bonds selected from non-anhydride/acid modified butadiene isoprene copolymer, non-anhydride/acid modified isobutene isoprene copolymer, non-anhydride/acid modified nitrile butadiene copolymer, and mixtures thereof, preferably is non-anhydride/acid modified butadiene isoprene copolymer, in particular non-anhydride/acid modified butadiene isoprene block copolymer. Said non-anhydride/acid modified rubber copolymer is preferably non-hydrogenated.

The number average molecular weight of the non-anhydride/acid modified rubber copolymer may vary between 5000 g/mol and 100000 g/mol, preferably between 8000 g/mol and 70000 g/mol.

Advantageously, the non-anhydride/acid modified rubber copolymer is liquid at 23°C and at atmospheric pressure (e.g. 101325 Pa).

The non-anhydride/acid modified rubber copolymer may have a glass transition temperature of less than -50°C. The glass transition temperature can be measured using differential scanning calorimetry (DSC), for example according to standard ASTM D 3418-82.

The non-anhydride/acid modified rubber copolymer content may be comprised between 1 % and 30 % by weight with respect to the total weight of the sulfur-curable composition, preferably between 3 % and 20 % by weight, more preferably between 5 % and 15 % by weight.

### Sulfur-based crosslinking agent

The sulfur-based crosslinking agent is used as a source of sulfur atoms to crosslink the rubber chains in the composition.

The sulfur-based crosslinking agent may be selected from sulfur, sulfur donors, and mixtures thereof, preferably a mixture of sulfur and at least one sulfur donor.

As examples of sulfur donors, mention may be made of compounds comprising at least one polysulfide group, in particular disulfide group, such as thiuram polysulfides (for example tetramethylthiuram disulfide, dipentamethylenethiuram tetrasulfide, tetrabenzylthiuram disulfide, tetrabutylthiuram disulfide, tetraethylthiuram disulfide, dipentamethylenethiuram hexasulfide), disulfur dichloride, 4,4'-dithiodimorpholine, N,N-craptolactam disulfide, 2-(morpholinodithio)benzothiazole and/or di(benzothiazol-2-yl) disulphide, and of compounds comprising a thiocarbamyl-sulfenamide group (i.e. >N-C(S)-S-N<), such as N-(oxydiethylene thiocarbamyl-N'-oxydiethylene sulfenamide). Preferably, the sulfur donor comprises at least one disulfide group, more preferably, the sulfur donor is selected from tetramethylthiuram disulfide, tetrabenzylthiuram disulfide, tetrabutylthiuram disulfide, tetraethylthiuram disulfide, 4,4'-dithiodimorpholine, N,N-craptolactam disulfide, 2-(morpholinodithio)benzothiazole, di(benzothiazol-2-yl) disulphide, and mixtures thereof, in particular di(benzothiazol-2-yl) disulphide.

The sulfur may have an average particle size comprised between 0.1 µm and 200 µm, preferably between 1 µm and 100 µm, more preferably between 10 µm and 80 µm.

The average particle size advantageously corresponds to the particle size Dv90, i.e. the maximum size of 90 % of the smallest particles by volume, and can be measured by laser diffraction on a MALVERN type device (for example according to ISO 13320).

The sulfur-based crosslinking agent content may be comprised between 0.1 % and 20 % by weight with respect to the total weight of the sulfur-curable composition, preferably between 1 % and 18 % by weight, more preferably between 3 % and 15 % by weight.

The sulfur content may be comprised between 0.1 % and 20 % by weight with respect to the total weight of the sulfur-curable composition, preferably between 1 % and 15 % by weight, more preferably between 3 % and 10 % by weight.

The sulfur donor content may be comprised between 0.1 % and 15 % by weight with respect to the total weight of the sulfur-curable composition, preferably between 0.5 % and 10 % by weight, more preferably between 1 % and 5 % by weight.

### Accelerator

Advantageously, the sulfur-curable composition according to the invention further comprises an accelerator, i.e. a compound to accelerate curing of said composition.

The accelerator may be selected from metal oxides, thioureas, thiuram monosulfides, benzothiazole sulfenamides, 2-mercaptobenzothiazole and salts thereof (e.g. zinc 2-mercaptobenzothiazole), 2-mercaptoimidazoline, 2-imidazolidinethione, guanidine derivatives, dithiocarbamates, and mixtures thereof, preferably from metal oxides, in particular zinc oxide.

The metal oxide may be selected from zinc oxide, magnesium oxide, and mixtures thereof, preferably zinc oxide.

The thiourea may be selected from ethylene thiourea, N,N-dibutylthiourea, N,N-diethylthiourea, and mixtures thereof.

The thiuram monosulfide may be selected from tetramethylthiuram monosulfide, tetraethylthiuram monosulfide, and mixtures thereof.

The benzothiazole sulfenamide may be selected from N-oxydiethylene-2-benzothiazole sulfenamide, N-cyclohexyl-2-benzothiazole sulfenamide, N,N-dicyclohexyl -2-benzothiazolesulfenamide, N,N-diisopropyl-2-benzothiazolesulfenamide, N-tert-butyl-2-benzothiazolesulfenamide, and mixtures thereof.

The guanidine derivative may be selected from N,N-diphenylguanidine, N,N-di-(2-methylphenyl)-guanidine, and mixtures thereof.

The dithiocarbamate may be selected from tellurium diethyldithiocarbamate, copper dimethyldithiocarbamate, bismuth dimethyldithiocarbamate, cadmium diethyldithiocarbamate, lead dimethyldithiocarbamate, zinc diethyldithiocarbamate, zinc dimethyldithiocarbamate, and mixtures thereof.

The accelerator content may be comprised between 1 % and 40 % by weight with respect to the total weight of the sulfur-curable composition, preferably between 5 % and 30 % by weight, more preferably between 10 % and 25 % by weight.

### Non-anhydride/acid modified rubber homopolymer

The sulfur-curable composition according to the invention may further comprise a non-anhydride/acid modified rubber homopolymer.

By "non-anhydride/acid modified rubber homopolymer", it is intended a rubber homopolymer comprising non-aromatic carbon-carbon double bonds, but no carboxylic anhydride group (-C(O)-O-C(O)-) and no carboxylic acid group (-COOH).

Advantageously, the non-anhydride/acid modified rubber homopolymer is a rubber comprising non-aromatic carbon-carbon double bonds selected from non-anhydride/acid modified polybutadiene, non-anhydride/acid modified polyisoprene, and mixtures thereof, in particular non-anhydride/acid modified polybutadiene. Said non-anhydride/acid modified rubber homopolymer is preferably non-hydrogenated.

The number average molecular weight of the non-anhydride/acid modified rubber homopolymer may vary between 8000 g/mol and 150000 g/mol, preferably between 10000 g/mol and 100000 g/mol.

Advantageously, the non-anhydride/acid modified rubber homopolymer is solid at 23°C and at atmospheric pressure (e.g. 101325 Pa).

The non-anhydride/acid modified rubber homopolymer content may be comprised between 0.1 % and 15 % by weight with respect to the total weight of the sulfur-curable composition, preferably between 0.5 % and 10 % by weight, more preferably between 1 % and 5 % by weight.

### Core-shell filler

The sulfur-curable composition according to the invention may further comprise a core-shell filler.

Core-shell fillers may be generally described as polymeric substances, typically in particulate (particle) form, comprising a core (inner portion) comprising (or consisting essentially of) a core polymer and a shell (outer portion) comprising (or consisting essentially of) a shell polymer. One or more intermediate polymer layers may be included between the core and the shell. By "consisting essentially of", it is intended that the core (or shell) advantageously comprises less than 5 % by weight of compounds other than the core (or shell) polymer, preferably less than 2% by weight, more preferably less than 1% by weight.

Typically, the shell polymer has a glass transition temperature which is higher than the glass transition temperature of the core polymer. The glass transition temperature of the polymers of the core-shell filler may be measured according to standard ISO 11357-2, for example with a heating rate of 20°C/min. Generally, the glass transition temperature of the core polymer is less than 10°C, preferably less than 0°C, more preferably less than -20°C. Generally, the glass transition temperature of the shell polymer is greater than 60°C, preferably greater than 80°C, more preferably greater than 100°C.

The core polymer may comprise a homopolymer and/or a copolymer of a conjugated diene comprising 4 to 12, preferably 4 to 8 carbon atoms (such as isoprene and/or butadiene), and/or a homopolymer and/or a copolymer of an alkyl (meth)acrylate in which the alkyl chain (linear or branched) comprises 1 to 12, preferably 1 to 8 carbon atoms (such as butyl acrylate).

Advantageously, the core polymer comprises (or consists essentially of) a homopolymer and/or a copolymer of a conjugated diene selected from isoprene, butadiene, and mixtures thereof, preferably butadiene. Preferably, the core polymer comprises (or consists essentially of) isoprene homopolymer, butadiene homopolymer, isoprene-butadiene copolymer, butadiene-styrene copolymer and/or isoprene-styrene copolymer, more preferably butadiene homopolymer and/or butadiene-styrene copolymer.

By "consists essentially of", it is intended that the core polymer advantageously comprises less than 5 % by weight of polymer(s) other than the aforementioned polymers with respect to the total weight of the core polymer, preferably less than 2% by weight, more preferably less than 1% by weight.

The core polymer may be crosslinked. The crosslinking agent(s) or monomer(s) may be selected from polyfunctional vinylaromatic compounds such as divinylbenzene and divinyltoluene, polyhydric alcohols such as ethylene glycol dimethacrylate and 1,3-butanediol diacrylate, trimethacrylates, allyl carboxylates such as allyl acrylate and allyl methacrylate, and di- and triallyl compounds such as diallyl phthalate, diallyl sebacate and triallyl triazine.

The shell polymer may comprise a homopolymer and/or a copolymer of an alkyl (meth)acrylate in which the alkyl chain (linear or branched) comprises 1 to 12, preferably 1 to 8 carbon atoms, more preferably 1 to 4 carbon atoms, such as methyl methacrylate.

Advantageously, the shell polymer comprises (or consists essentially of) a homopolymer and/or a copolymer of an alkyl (meth)acrylate selected from methyl acrylate, ethyl acrylate, butyl acrylate, methyl methacrylate, ethyl methacrylate, butyl methacrylate, and mixtures thereof, preferably methyl methacrylate homopolymer and/or a copolymer of methyl methacrylate.

The shell polymer may further comprise repeating units derived from monomers selected from glycidyl (meth)acrylate, (meth)acrylic acid, amides derived from (meth)acrylic acid such as dimethylacrylamide, 2-methoxyethyl (meth)acrylate, 2-aminoethyl (meth)acrylate, and mixtures thereof.

In particular, the shell polymer comprises (or consists essentially of) methyl methacrylate homopolymer and/or a copolymer comprising at least 70 % by weight of repeating units derived from methyl methacrylate with respect to the total weight of said copolymer.

By "consists essentially of", it is intended that the shell polymer advantageously comprises less than 5 % by weight of polymer(s) other than the aforementioned polymers with respect to the total weight of the shell polymer, preferably less than 2% by weight, more preferably less than 1% by weight.

The shell polymer may be crosslinked. The crosslinking agent(s) or monomer(s) may be selected from polyfunctional vinylaromatic compounds such as divinylbenzene and divinyltoluene, polyhydric alcohols such as ethylene glycol dimethacrylate and 1,3-butanediol diacrylate, trimethacrylates, allyl carboxylates such as allyl acrylate and allyl methacrylate, and di- and triallyl compounds such as diallyl phthalate, diallyl sebacate and triallyl triazine.

When the core-shell filler only has two distinct parts, the shell polymer is preferably grafted onto the core polymer.

According to an embodiment, the core-shell filler comprises:
- a core comprising (or consisting essentially of) a core polymer comprising (or consisting essentially of) butadiene homopolymer and/or butadiene-styrene copolymer, and
- a shell comprising (or consisting essentially of) a shell polymer comprising (or consisting essentially of) methyl methacrylate homopolymer and/or a copolymer of methyl methacrylate, in particular methyl methacrylate homopolymer and/or a copolymer comprising at least 70 % by weight of repeating units derived from methyl methacrylate with respect to the total weight of said copolymer.

By "a core/shell consisting essentially of", it is intended that the core/shell advantageously comprises less than 5 % by weight of ingredient(s) other than the core/shell polymer with respect to the total weight of the core/shell, preferably less than 2% by weight, more preferably less than 1% by weight.

The weight average diameter of the core-shell filler may be comprised between 10 and 900 nm, preferably between 20 and 700 nm, more preferably between 20 and 500 nm. The weight average diameter may be measured by transmission electron microscopy.

When a core-shell filler is present, the core-shell filler content may be comprised between 1 % and 20 % by weight with respect to the total weight of the sulfur-curable composition, preferably between 3 % and 15 % by weight, for example between 4 % and 10 % by weight.

### Other fillers

The sulfur-curable composition according to the invention may further comprise a filler other than a core-shell filler, which is preferably selected from mineral fillers and mixtures thereof.

The mineral filler may be selected from huntite, hydromagnesite, metal hydroxides (such as aluminium trihydroxide, magnesium hydroxide), red phosphorus, boron compounds (such as borates, boron oxide, colemanite), mineral hollow microspheres, clay, quartz, carbonate fillers, kaolin, gypsum, zeolites, and mixtures thereof.

Preferably, the mineral filler is selected from huntite, hydromagnesite, metal hydroxides, carbonate fillers, and mixtures thereof, more preferably from huntite, hydromagnesite, carbonate fillers, and mixtures thereof.

Among the mineral hollow microspheres, mention may be made of hollow glass microspheres, and more particularly those made of sodium and calcium borosilicate or aluminosilicate.

Advantageously, the carbonate filler is selected from alkali metal or alkaline earth metal carbonates and mixtures thereof. Preferably, the carbonate filler comprises calcium carbonate (which may be coated with fatty acids such as stearic acid), more preferably the carbonate filler is ground calcium carbonate.

The zeolites may be selected from synthetic zeolites of type A, X and/or Y, preferably type A, and may have a pore diameter of between 3 Å and 5 Å.

The average particle size of the mineral filler may vary from 10 nm to 400 µm, preferably from 20 nm to 100 µm.

The average particle size advantageously corresponds to the particle size Dv50, i.e. the maximum size of 50 % of the smallest particles by volume, and can be measured by laser diffraction on a MALVERN type device (for example according to ISO 13320).

The filler content (other than a core-shell filler) may be up to 50 % by weight with respect to the total weight of the sulfur-curable composition, preferably between 5 % and 40 % by weight.

### Other additives

The sulfur-curable composition according to the invention may further comprise one or more additives selected from ultraviolet (UV) stabilizers (or antioxidants), rheological agents, moisture scavengers, pigments, and mixtures thereof.

The total additive content may be up to 10 % by weight with respect to the total weight of the sulfur-curable composition, preferably between 1 % and 5 % by weight.

UV stabilizers are typically introduced to protect the composition from degradation resulting from reaction with oxygen which is likely to be formed by the action of heat or light. These compounds can include antioxidants capable of scavenging free radicals.

The UV stabilizer (or antioxidant) may be selected from benzotriazoles, benzophenones, phenolic antioxidants such as α-tocopherol, 4,4'-thiobis(2-t-butyl-5-methylphenol), 2,2'-thiobis(6-t-butyl-4-methylphenol), 2,2'-methylenebis(6-t-butyl-4-methylphenol), 4,4'-butylidenebis[2-t-butyl-5- methylphenol] or 2,2'-methylenebis(6-nonyl-p-cresol)), hindered phenols such as octadecyl 3-(3,5-di-tert-butyl-4-hydroxyphenyl)propionate (CAS: 2082-79-3), pentaerythritol tetrakis[3-(3,5-di-tert-butyl-4-hydroxyphenyl)propionate] (CAS: 6683-19-8) or ethylene bis(oxyethylene) bis-(3-(5-tert-butyl-4-hydroxy-m-tolyl)propionate) (CAS: 36443-68-2), hindered amines (also named HALS for "hindered amine light stabilizers") such as bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) or 4,4'-bis(α,α-dimethylbenzyl)diphenylamine, and mixtures thereof.

Preferably, the UV stabilizer (or antioxidant) is selected from phenolic antioxidants, hindered phenols, and mixtures thereof, more preferably from phenolic antioxidants.

The UV stabilizer content may be up to 3 % by weight with respect to the total weight of the sulfur-curable composition, preferably between 0.1 % and 1 % by weight.

The rheological agent is preferably a thixotropic agent which may be selected from:
- PVC plastisols, corresponding to a suspension of PVC in a plasticizing agent which is miscible with PVC, obtained *in situ* by heating to temperatures ranging from 60°C to 80°C. These plastisols can be those described in particular in the publication Polyurethane Sealants, Robert M. Evans, ISBN 087762-998-6,
- fumed silica (hydrophilic or hydrophobic),
- urea derivatives resulting from the reaction of a diisocyanate monomer, preferably an aromatic diisocyanate monomer such as methylene diphenyl diisocyanate (e.g. 4,4'-MDI), with an aliphatic primary amine such as butylamine,
- waxes derived from castor oil such as THIXCIN^{®} R sold by ELEMENTIS,
- amide waxes, preferably micronized, such as CRAYVALLAC SLX sold by Arkema, and
- mixtures thereof.

More preferably, the rheological agent is fumed silica, in particular hydrophilic fumed silica.

The rheological agent content may be up to 8 % by weight with respect to the total weight of the sulfur-curable composition, preferably between 0.1 % and 5 % by weight.

The moisture scavenger may be selected from inorganic moisture scavengers, preferably calcium oxide.

The moisture scavenger content may be up to 5 % by weight with respect to the total weight of the sulfur-curable composition, preferably between 1 % and 4 % by weight.

The pigment selected from organic pigments, inorganic pigments, and mixtures thereof, preferably from inorganic pigments. For example, the pigment may be selected from phthalocyanine-based pigments (such as copper phthalocyanine, halogenated copper phthalocyanine, metal-free phthalocyanine), anthraquinone-based pigments (such as 1-methylamino-4-o-tolylaminoanthranquinone, 1,4-diisopropyl aminoanthraquinone, 1,4-diaminoanthraquinone, 1,4-dibutyl-aminoanthraquinone, 1-amino-4-anilinoanthraquinone), quinacridone-based pigments, perylene-based pigments; thioindigo-based pigments, quinophthalone-based pigments, titanium dioxide, carbon black, manganese ferrite, and mixtures thereof, preferably from titanium dioxide, carbon black, manganese ferrite, and mixtures thereof, in particular carbon black.

The pigment content may be up to 3 % by weight with respect to the total weight of the sulfur-curable composition, preferably between 0.01% and 0.5 % by weight.

### Other features of the sulfur-curable composition

Advantageously, the sulfur-curable composition according to the invention comprises less than 3 % by weight of an epoxy resin with respect to the total weight of the sulfur-curable composition, preferably less than 1 % by weight.

According to an embodiment, the sulfur-curable composition according to the invention comprises:
- between 1 % and 40 % by weight of an anhydride and/or acid modified rubber,
- between 1 % and 20 % by weight of an aromatic rubber,
- between 1 % and 30 % by weight of a non-anhydride/acid modified rubber copolymer,
- between 0.1 % and 20 % by weight of a sulfur-based crosslinking agent,
- between 1 % and 40 % by weight of an accelerator,
- optionally between 0.1 % and 15 % by weight of a non-anhydride/acid modified rubber homopolymer,
- optionally between 1 % and 20 % by weight of a core-shell filler,
- optionally up to 50 % by weight of a filler other than a core-shell filler, and
- optionally up to 10 % by weight of one or more additives selected from UV stabilizers (or antioxidants), rheological agents, moisture scavengers, pigments, and mixtures thereof,
the weight percentages being with respect to the total weight of the sulfur-curable composition.

Preferably, the sulfur-curable composition consists essentially of the ingredients mentioned above. By "consists essentially of", it is intended that the composition comprises less than 5 % by weight of ingredients other than the aforementioned ingredients, relative to the total weight of the composition, preferably less than 2% by weight, even more preferably less than 1% by weight.

The ingredients of this embodiment and their particular contents are as described above, including the embodiments and preferred features.

In particular, the sulfur-curable composition comprises:
- between 8 % and 20 % by weight of an anhydride and/or acid modified rubber, the anhydride and/or acid modified rubber being preferably:
   - polyisoprene and/or polybutadiene modified with
   - at least one anhydride compound selected from maleic anhydride, dimethylmaleic anhydride, itaconic anhydride, tetrahydrophthalic anhydride, citraconic anhydride, and mixtures thereof,
- between 3 % and 10 % by weight of an aromatic rubber, the aromatic rubber being preferably isoprene and/or butadiene copolymerized with styrene and/or α-methylstyrene,
- between 5 % and 15 % by weight of a non-anhydride/acid modified rubber copolymer, the non-anhydride/acid modified rubber copolymer being preferably a non-anhydride/acid modified butadiene isoprene copolymer,
- between 3 % and 15 % by weight of a sulfur-based crosslinking agent, the sulfur-based crosslinking agent being preferably a mixture of sulfur and at least one sulfur donor comprising at least one disulfide group,
- between 10 % and 25 % by weight of an accelerator, the accelerator being preferably selected from zinc oxide, magnesium oxide, and mixtures thereof,
- optionally between 1 % and 5 % by weight of a non-anhydride/acid modified rubber homopolymer, the non-anhydride/acid modified rubber homopolymer being preferably selected from non-anhydride/acid modified polybutadiene, non-anhydride/acid modified polyisoprene, and mixtures thereof,
- optionally between 4 % and 10 % by weight of a core-shell filler, the core-shell filler preferably comprising:
   - a core comprising a core polymer comprising butadiene homopolymer and/or butadiene-styrene copolymer, and
   - a shell comprising a shell polymer comprising methyl methacrylate homopolymer and/or a copolymer of methyl methacrylate,
- optionally between 5 % and 40 % by weight of a filler other than a core-shell filler, the filler being preferably selected from huntite, hydromagnesite, metal hydroxides, carbonate fillers, and mixtures thereof, and
- optionally between 1 % and 5 % by weight of one or more additives selected from UV stabilizers (or antioxidants), rheological agents, moisture scavengers, pigments, and mixtures thereof,
the weight percentages being with respect to the total weight of the sulfur-curable composition.

Preferably, the sulfur-curable composition consists essentially of the ingredients mentioned above.

The ingredients of this embodiment and their particular contents are as described above, including the embodiments and preferred features.

The sulfur-curable composition according to the invention can be prepared by simple mixing of its ingredients. An example of preparation is described in Example 2.

### Method for bonding substrates

The invention also relates to a method for bonding substrates comprising the steps of:
- coating, on at least one surface of the substrates, of the sulfur-curable composition according to the invention as described above (including the embodiments and preferred features), then
- contacting the substrates.

It is understood that, during the coating step and the contacting step, the sulfur-curable composition is in an uncured state.

The substrates may be identical or different.

The substrates to be implemented are vary varied, and are advantageously made of plastic, metal and/or composite materials, preferably metals.

The plastic material may be a polyolefin, such as polyethylene or polypropylene, or a polyester.

The metal material may be pure or an alloy, for example aluminum and/or steel, preferably steel, in particular cold rolled steel, hot-dip galvanised steel and/or electro-galvanised steel.

The composite material may be a reinforced plastic material, such as fiber-reinforced plastic, in particular sheet moulding composite (SMC). The fibers in the fiber-reinforced plastic may be glass, carbon, aramid or basalt fibers, preferably glass fibers. The fiber length may vary between 6 mm and 50 mm. The polymer in the reinforced plastic material may be polyester, polyolefin, epoxy or vinyl ester resin, preferably polyester or polyolefin (such as polyethylene or polypropylene). The polymer in the reinforced plastic material is preferably unsaturated. The reinforced plastic material may comprise other compounds than the fibers and the polymer (such as filler and/or catalyst).

By "contacting the substrates", it is intended that the substrates are contacted *via* the sulfur-curable composition, which is sandwiched between them.

After contacting the substrates, the sulfur-curable composition is advantageously cured. Preferably, curing is carried out between 100°C and 210°C, more preferably between 150°C and 200°C.

### Article

The invention also relates to an article comprising the (cured or uncured) sulfur-curable composition according to the invention as described above (including the embodiments and preferred features), said composition bonding at least two substrates of said article.

The article may be obtained thanks to the method for bonding substrates according to the invention.

The substrates are preferably as described above for the method for bonding substrates according to the invention (including the embodiments and preferred features), in particular the substrates are made of plastic, metal and/or composite materials, preferably metals.

### Use of the sulfur-curable composition

The invention further relates to the use of the sulfur-curable composition according to the invention as an adhesive, in particular a crash-resistant adhesive, for example in a vehicle.

The sulfur-curable composition is as described above, including the embodiments and preferred features.

Preferably, the sulfur-curable composition is used for sealing substrates as described above (including the embodiments and preferred features) in the method for bonding substrates according to the invention.

All the embodiments described above can be combined with each other. In particular, the various aforementioned ingredients in the sulfur-curable composition, and in particular the preferred embodiments, can be combined with each other.

The following examples illustrate the invention without limiting it.

### EXAMPLES

### Example 1: Materials and methods

### Materials

The following materials were implemented:
- POLYVEST^{®} MA 75 (by Evonik): liquid maleic anhydride adduct of polybutadiene having a number average molecular weight of about 3000 g/mol and an acid number of 70-90 mg KOH/g, anhydride modified rubber,
- ZINC OXIDE: accelerator,
- LBR 300 (by KURARAY): liquid butadiene homopolymer having a molecular weight of about 45000 g/mol, non-anhydride/acid modified rubber homopolymer,
- INTENE^{®} 50 (by Versalis): solid polybutadiene, non-anhydride/acid modified rubber homopolymer,
- LUVOMAXX MBTS (by LEHVOSS): di(benzothiazol-2-yl) disulphide, sulphur donor,
- ULTRACARB U5 (by LKAB): milled huntite and hydromagnesite, mineral filler,
- AEROSIL 300 (by Evonik): hydrophilic fumed silica,
- GROUND SULPHUR (by Solvay): sulphur having a particle size of about 300 mesh (50 µm), crosslinking agent,
- CALOXOL CP2 (by OMYA): calcium oxide with 99.95% of particles having a particle size of less than about 45 µm, moisture scavenger,
- RAVEN 1170 (by BIRLA CARBON): carbon black, pigment,
- POLCARB^{®} 29 (by IMERYS): ground calcium carbonate having an average particle size d50 of 3.4 µm, filler,
- NAUGAWHITE^{®} (by addivant): 2,2'-methylenebis(6-nonyl-p-cresol), antioxidant,
- LIR 390 (by KURARAY): liquid isoprene butadiene block copolymer having a molecular weight of about 48000 g/mol, non-anhydride/acid modified rubber copolymer,
- L-SBR 841 (by KURARAY): liquid styrene butadiene random copolymer having a molecular weight of about 10000 g/mol, aromatic rubber,
- Clearstrength^{®} E-950 (by Arkema): methylmethacrylate-butadiene-styrene core-shell particles, core-shell filler.

### Lap shear strength

The lap shear strength of each composition was measured as follows:
Two rectangular plates of steel (either two plates of cold rolled steel (CRS) or one plate of hot-dip galvanized (HDG) and one plate of electro-galvanised (EG) steel) with dimensions of: 50 mm × 25 mm were implemented. A rectangular bond area with dimensions of 12 mm × 25 mm was defined, using a marker, at the end of each plate.

The composition to be tested was applied on the bonding area of a 1^{st} substrate plate in an amount corresponding to a thickness of 0.15 mm. Then, the bond area of the 2^{nd} substrate plate was superimposed on the coated area of the 1^{st} substrate plate, so as to obtain an assembly in which the free ends of the two substrate plates are aligned on either side of the two areas joined by the composition.

The assembly obtained was held by clips and cured at 175°C for 25 minutes, then at 165°C for 25 minutes.

The assembly was then cooled at the temperature needed for the test, and its two free ends were pulled by means of a tensometer at a constant speed equal to 25 mm/minute, until the assembly breaks, for which the applied force is recorded.

### Impact resistance

The impact resistance of each composition was measured by the impact wedge test according to ISO 11343:2003, at 23°C or -35°C. In particular, each composition was applied between two sheets of steel (hot-dip galvanized: DX54 Z100, and electro-galvanized: DC04 ZE75/75), heated for 30 min at 180°C to cure, and cooled at room temperature (23°C) before testing.

### Example 2: Properties of compositions according to the invention and comparative compositions

Compositions 1-4 were prepared by mixing the ingredients set forth in Table 1. The percentages for each ingredient are percentages by weight based on the total weight of the composition. In particular, Intene^{®} 50 was first mixed with sulphur, zinc oxide, POLCARB^{®} 29, RAVEN 1170, NAUGAWHITE^{®} and a part of POLYVEST^{®} MA 75 at room temperature (about 23°C) with a high-shear z-blade mixer with no pressure or vacuum applied. Then the remaining powders were added individually (LUVOMAXX MBTS, ULTRACARB U5, AEROSIL 300 and CALOXOL CP2) with the remaining part of POLYVEST^{®} MA 75 which was added gradually throughout. Then LIR 390 followed by L-SBR 841 (or LBR 300 for composition 1) were added slowly. Optionally, Clearstrength E-950 was added at the end of the mix. A vacuum (about -1 bar) was then applied for 30 minutes to remove air and moisture before removing the product from the mixer. The end result was a thick paste.

**Table 1: Compositions 1-4**

| **Composition** | **1 (comp.)** | **2 (inv.)** | **3 (inv.)** | **4 (inv.)** |
|---|---|---|---|---|
| POLYVEST^{®} MA 75 (%) | 19.0 | 14.7 | 13.9 | 12.5 |
| ZINC OXIDE (%) | 22.7 | 21.6 | 20.5 | 18.4 |
| LBR 300 (%) | 9.4 | - | - | - |
| INTENE^{®} 50 (%) | 2.6 | 2.5 | 2.3 | 2.1 |
| LUVOMAXX MBTS (%) | 3.9 | 3.7 | 3.5 | 3.1 |
| ULTRACARB U5 (%) | 25.5 | 24.2 | 23.0 | 20.6 |
| AEROSIL 300 (%) | 0.6 | 0.6 | 0.6 | 0.5 |
| GROUND SULPHUR (%) | 6.2 | 5.9 | 5.6 | 5.0 |
| CALOXOL CP2 (%) | 3.1 | 3.0 | 2.9 | 2.5 |
| RAVEN 1170 (%) | 0.1 | 0.1 | 0.1 | 0.1 |
| POLCARB^{®} 29 (%) | 6.2 | 5.9 | 5.6 | 5.0 |
| NAUGAWHITE^{®} (%) | 0.7 | 0.6 | 0.6 | 0.5 |
| LIR 390 (%) | - | 10.0 | 9.5 | 8.5 |
| L-SBR 841 (%) | - | 7.2 | 6.9 | 6.2 |
| Clearstrength E-950 (%) | - | - | 5.0 | 15.0 |

Their properties were then evaluated as described in Example 1, and the results are indicated below.

**Table 2: Properties of compositions 1-4 (ND: not determined)**

| **Composition** | **1 (comp.)** | **2 (inv.)** | **3 (inv.)** | **4 (inv.)** |
|---|---|---|---|---|
| Lap shear strength 23°C (CRS) (MPa) | 20.6 | 19.7 | 17.7 | 10.8 |
| Lap shear strength 80°C (CRS) (MPa) | 9.3 | 8.7 | 6.2 | 7.2 |
| Lap shear strength -35°C (CRS) (MPa) | 22.4 | ND | 23.2 | 18.0 |
| Lap shear strength 23°C (HDG/EG) (MPa) | 16.2 | 13.3 | 13.4 | 10.8 |
| Impact resistance 23°C (kN) | 20.7 | 37.2 | 33.0 | 34.4 |
| Impact resistance -35°C (kN) | 0.0 | 6.7 | 6.0 | 15.3* |

| | | | | |
|---|---|---|---|---|
| *Tested at -40°C | | | | |

Composition 2 according to the invention makes it possible to significantly improve the impact resistance at 23°C and at -35°C, while maintaining a similar lap shear strength. In particular, the combination of a non-anhydride/acid modified rubber copolymer (LIR 390) and an aromatic rubber (L-SBR 841) surprisingly makes it possible to increase the impact resistance at 23°C by about 80% and to achieve a not zero and significant impact resistance at -35°C, compared to comparative composition 1 not comprising these ingredients.

Furthermore, improved impact resistances were also observed for compositions 3 and 4 according to the invention, which further comprise core-shell particles. In particular, composition 4 according to the invention greatly improves the impact resistance at -40°C.

## Claims

1. A sulfur-curable composition comprising:
- an anhydride and/or acid modified rubber,
- an aromatic rubber,
- a non-anhydride/acid modified rubber copolymer, and
- a sulfur-based crosslinking agent.

2. The sulfur-curable composition according to claim 1, wherein the anhydride and/or acid modified rubber is an anhydride and/or acid modified rubber comprising non-aromatic carbon-carbon double bonds selected from anhydride and/or acid modified polyisoprene, anhydride and/or acid modified polybutadiene, anhydride and/or acid modified polypentadiene, anhydride and/or acid modified butadiene isoprene copolymer, anhydride and/or acid modified isobutene isoprene copolymer, anhydride and/or acid modified polychloroprene, anhydride and/or acid modified nitrile butadiene copolymer, and mixtures thereof.

3. The sulfur-curable composition according to claim 1 or 2, wherein the anhydride and/or acid modified rubber is a rubber comprising non-aromatic carbon-carbon double bonds modified with at least one anhydride compound comprising at least one non-aromatic carbon-carbon double bond and at least one carboxylic anhydride group, preferably a cyclic anhydride compound.

4. The sulfur-curable composition according to claim 3, wherein the anhydride compound is selected from maleic anhydride, dimethylmaleic anhydride, itaconic anhydride, tetrahydrophthalic anhydride, citraconic anhydride, and mixtures thereof.

5. The sulfur-curable composition according to any one of claims 1 to 4, wherein the aromatic rubber is an aromatic rubber comprising non-aromatic carbon-carbon double bonds selected from aromatic polyisoprene, aromatic polybutadiene, aromatic polypentadiene, aromatic butadiene isoprene copolymer, aromatic isobutene isoprene copolymer, aromatic polychloroprene, aromatic nitrile butadiene copolymer, and mixtures thereof.

6. The sulfur-curable composition according to any one of claims 1 to 5, wherein the aromatic rubber is a rubber comprising non-aromatic carbon-carbon double bonds modified with at least one aromatic compound comprising at least one non-aromatic carbon-carbon double bond and only one aromatic ring, for example selected from styrene, 2-methylstyrene, 3-methylstyrene, 4-methylstyrene, α-methylstyrene, and mixtures thereof.

7. The sulfur-curable composition according to any one of claims 1 to 6, wherein the non-anhydride/acid modified rubber copolymer is a rubber comprising non-aromatic carbon-carbon double bonds selected from non-anhydride/acid modified butadiene isoprene copolymer, non-anhydride/acid modified isobutene isoprene copolymer, non-anhydride/acid modified nitrile butadiene copolymer, and mixtures thereof.

8. The sulfur-curable composition according to any one of claims 1 to 7, wherein the sulfur-based crosslinking agent is a mixture of sulfur and at least one sulfur donor.

9. The sulfur-curable composition according to any one of claims 1 to 8, further comprising an accelerator.

10. The sulfur-curable composition according to any one of claims 1 to 9, further comprising a non-anhydride/acid modified rubber homopolymer.

11. The sulfur-curable composition according to any one of claims 1 to 10, further comprising a core-shell filler.

12. The sulfur-curable composition according to any one of claims 1 to 11, comprising less than 3 % by weight of an epoxy resin with respect to the total weight of the sulfur-curable composition.

13. A method for bonding substrates comprising the steps of:
- coating, on at least one surface of the substrates, of the sulfur-curable composition according to any one of claims 1 to 12, then
- contacting the substrates.

14. An article comprising the sulfur-curable composition according to any one of claims 1 to 12, said composition bonding at least two substrates of said article.

15. Use of the sulfur-curable composition according to any one of claims 1 to 12 as an adhesive, in particular a crash-resistant adhesive.
